# FASCICULE DE BREVET EUROPEEN

(11) **EP 1 960 238 B1**
(45) Date de publication et mention de la délivrance du brevet: **26.01.2011**
(21) Numéro de dépôt: 06842152.8
(22) Date de dépôt: 13.12.2006
(51) Int. Cl.: B60R 21/26

(54) **DISPOSITIF DE GENERATION DE GAZ POUR SYSTEME DE SECURITE**
GASGENERATOR FÜR EIN SICHERHEITSSYSTEM
GAS GENERATOR FOR A SAFETY SYSTEM

(30) Priorité: 15.12.2005 FR 0512745
(43) Date de publication de la demande: 27.08.2008
(73) Titulaire: SEVA TECHNOLOGIES, 75020 Paris (FR)
(72) Inventeur: CORD, Paul-Philippe, F-75009 Paris (FR); BETEILLE, Fabien, F-31250 Revel (FR)
(74) Mandataire: Novagraaf Technologies
(86) Numéro de dépôt international: PCT/FR2006/051342
(87) Numéro de publication internationale: WO 2007/068856

(56) Documents cités:
- WO-A-01/89885
- DE-A1- 19 822 654
- US-A- 5 897 136

## Description

La présente invention se rapporte au domaine des systèmes de sécurité pour la protection de biens et/ou de personnes, notamment dans un véhicule automobile. Elle se rapporte plus particulièrement à un dispositif de génération de gaz raccordé à un coussin gonflable pour l'absorption de choc comportant une charge explosible formée au moins par un composé pyrotechnique primaire et un composé secondaire.

L'art antérieur connaît déjà la demande de brevet WO 0189885, déposée au nom de la demanderesse, qui décrit un tel dispositif de génération de gaz. Dans ce système, les produits de combustion du composé pyrotechnique primaire pilote la décomposition d'un composé secondaire. Le composé primaire est conditionné dans une chambre primaire associée à un initiateur muni d'une charge renforçatrice. Il se produit au moins une interaction des produits de combustion du composé primaire et ceux du composé secondaire par réaction d'oxydoréduction dans un volume faiblement confiné. Par volume faiblement confiné, on entend un volume tel que la pression des gaz réagissant dans ce volume soit inférieure à quelques centaines de bars. Par exemple, ce volume faiblement confiné peut être constitué par une première zone d'une chambre secondaire dont une seconde zone renferme le composé secondaire. Des orifices d'évacuation des gaz sont ménagés autour de cette zone de réaction. Avantageusement, la zone de réaction est ménagée entre la chambre primaire et la zone de stockage du composé secondaire.

Dans un mode préféré de réalisation décrit dans cette demande de brevet, le composé secondaire se présente d'un composé solide pulvérulent, généralement du nitrate d'ammonium. Or, il existe un risque que de la poudre soit éjectée par les orifices d'évacuation des gaz avant décomposition totale du composé secondaire.

Un des objectifs de la présente invention est par conséquent d'améliorer le dispositif décrit dans la demande de brevet WO 0189885 afin de prévenir ce risque.

A cet effet, elle propose un dispositif de génération de gaz pour dispositif de sécurité comprenant une charge explosible formée au moins par un composé pyrotechnique primaire, dans une première chambre, initié par au moins un initiateur muni d'une charge renforçatrice et un composé secondaire, dans une seconde chambre, dont la décomposition est pilotée par des produits combustion du composé primaire, une interaction des produits de combustion du composé primaire et de ceux du composé secondaire par réaction d'oxydoréduction se produisant dans un volume faiblement confiné, la première chambre communiquant avec ladite seconde chambre par l'intermédiaire d'une tuyère centrale et ladite seconde chambre étant pourvue au niveau d'une première zone voisine de ladite première chambre d'orifices périphériques d'évacuation des gaz et renfermant au niveau d'une seconde zone ledit composé secondaire, caractérisé en ce qu'un moyen formant obstacle au passage des gaz est installé dans ladite seconde chambre entre lesdites première et seconde zones, ledit moyen formant obstacle laissant passer les gaz dans une partie centrale et faisant obstacle à leur passage dans une partie périphérique avec une transparence suffisante pour que le volume d'interaction reste faiblement confiné.

Le jet de propergol qui pilote la décomposition de la charge secondaire a un cheminement dans ladite seconde zone, du fait de la présence d'un obstacle périphérique à l'entrée de cette zone, qui crée un volume de recirculation dans lequel la température est maximale et l'énergie cinétique minimale. Il en résulte que la poudre n'est pas éjectée comme c'est le cas dans le dispositif de l'Art antérieur.

Avantageusement, ledit moyen formant obstacle a une transparence de 40 à 60%.

De la sorte, est ménagé un véritable obstacle périphérique au passage de gaz et le volume d'interaction reste faiblement confiné.

Avantageusement, ledit moyen formant obstacle a une transparence de 50%.

Selon un mode de réalisation préféré, ledit moyen formant obstacle est une grille à mailles en losange pourvue d'un orifice central circulaire.

Alternativement, ledit moyen formant obstacle est une plaque métallique percée de trous circulaires disposés autour d'un orifice central circulaire de plus grand diamètre.

La grille ou la plaque perforée, contrairement à celles qui sont parfois utilisées dans l'Art antérieur comme dans la demande de brevet allemand DE 19822654, n'ont pas vocation à retenir la charge secondaire. Les dimensions des ouvertures de la grille ou plaque perforée sont donc avantageusement supérieure à la taille des grains de poudre et garantissent que la grille garde en toute circonstance une transparence suffisante pour que le volume d'interaction reste faiblement confiné. Par exemple, ces ouvertures ont un diamètre compris entre 2 et 6 mm pour une taille de grains de poudre généralement comprise entre 5 et 500 micromètres. Cela permet d'éviter le risque que de la poudre ne bouche les ouvertures, limitant l'évacuation des gaz.

La circulation qui s'établit du fait de la présence de la grille ou plaque perforée conduit à une poussée faible et répartie sur un lit de poudre. La partie de la poudre qui ne réagit pas est faiblement sollicitée et ne risque pas d'être entraînée au-delà de la grille avant décomposition.

Dans certains cas, la charge secondaire se présente sous forme de granulés ou de pastilles de taille supérieure au millimètre. Dans ce cas, il n'y a pas de risque de bouchage des ouvertures et la taille de ces dernières a moins d'importance, pourvu que le moyen formant obstacle ait une transparence permettant, d'une part, que le volume d'interaction reste faiblement confiné et, d'autre part, que la circulation qui s'établit du fait de la présence de la grille ou plaque soit satisfaisante.

Avantageusement, ledit moyen formant obstacle est en inox et a une épaisseur comprise entre 0,5 et 1,5 mm.

Avantageusement, la grille ou plaque perforée en inox a une épaisseur comprise entre 0,7 et 1 mm.

Alternativement, la grille ou plaque perforée est en aluminium et a une épaisseur comprise entre 1 et 3 mm.

L'inox et l'aluminium sont deux matériaux compatibles avec le nitrate d'ammonium.

Alternativement, ledit orifice central circulaire est remplacé par une zone centrale de moindre épaisseur adaptée à être brisée par le jet de gaz provenant de ladite tuyère.

Avantageusement, ledit moyen formant obstacle est maintenu par un épaulement annulaire ménagé sur la périphérie intérieure de ladite seconde chambre, entre lesdites premières et secondes zones.

La présence du moyen formant obstacle assure la combustion totale de la poudre à l'intérieur du dispositif, de sorte qu'il n'y a pas d'éjection de poudre.

Selon un autre aspect de la présente invention, la taille des orifices périphériques d'évacuation des gaz est telle que la pression de fonctionnement dans la seconde chambre est comprise entre 50 et 250 bars.

Avantageusement, la pression de fonctionnement est comprise entre 100 et 200 bars.

Avantageusement, un dispositif intérieur d'operculage desdits orifices d'évacuation assure la fermeture de ces orifices, ledit dispositif étant adapté à se rompre lorsque la pression dans la seconde chambre atteint un niveau donné.

Avantageusement, ledit niveau de pression pour lequel ledit dispositif intérieur d'operculage se rompt est compris entre 30 et 170 bars.

Avantageusement, ledit niveau de pression est compris entre 70 et 130 bars.

Avantageusement, ledit dispositif est une bande métallique maintenue sur la paroi intérieure de la chambre par une autre pièce métallique ou un adhésif.

Selon un autre aspect de la présente invention, ladite seconde partie de la seconde chambre contenant le composé secondaire est fermée hermétiquement au moyen d'un opercule adapté à se rompre sous la pression du gaz issu de ladite tuyère.

Avantageusement, ledit opercule comporte des lignes d'amorces de rupture en étoile. Il peut s'agir de zones de plus faibles épaisseurs ou pré-affaiblies.

Alternativement, l'ensemble de l'opercule peut avoir une plus faible épaisseur.

Selon un autre aspect de la présente invention, ledit opercule est installé contre ledit moyen formant obstacle.

Alternativement, ledit moyen est directement operculé.

Avantageusement, ladite tuyère a une forme d'ouverture en bilboquet avec une partie cylindrique centrale et deux évasements.

Avantageusement ces évasements ont un angle d'ouverture entre 10° et 120°.

Cette forme permet de créer et d'ajuster une densité d'énergie facilitant l'allumage du nitrate d'ammonium.

Avantageusement, ladite seconde chambre est fermée par un bouchon adapté à être introduit dans ladite seconde chambre et comprenant une gorge périphérique permettant sa fixation par sertissage.

Selon un autre aspect de la présente invention, ledit composé secondaire comprend du nitrate d'ammonium et un additif réducteur à base de dérivés de guanidine.

Avantageusement, ledit additif à base de guanidine comprend du nitrate de guanidine, éventuellement additivé d'anti-mottant.

Alternativement, ledit additif à base de guanidine comprend de la nitroguanidine à petits grains stabilisé notamment avec ses impuretés intrinsèques.

Le moyen formant obstacle peut être constitué, suivant un mode de réalisation alternatif moins avantageux, par une restriction de diamètre de la chambre secondaire suffisamment faible pour que le volume de réaction reste faiblement confinée. Par exemple, il peut s'agir d'une restriction de diamètre à 21,5 mm pour une chambre de diamètre 30 mm.

On doit noter qu'une utilisation du dispositif selon l'invention consiste en l'actionnement de dispositif prétensionneur de ceinture.

On doit noter qu'une autre utilisation du dispositif selon l'invention consiste en la pressurisation d'enceintes ou de vérins.

On comprendra mieux l'invention à l'aide de la description, faite ci-après à titre purement explicatif, de plusieurs exemples de réalisation de l'invention, en référence aux figures annexées :
- la figure 1 illustre une vue en coupe longitudinale d'une première variante du dispositif selon l'invention ;
- la figure 2 illustre une vue en plan d'une grille pour le dispositif de la figure 1 ;
- la figure 3 illustre une vue en plan d'une grille pour le dispositif de la figure 1 selon un autre mode de réalisation;
- la figure 4 illustre une vue en plan d'un opercule pour le dispositif de la figure 1 ;
- la figure 5 illustre une vue en coupe longitudinale d'une seconde variante du dispositif selon l'invention ;
- la figure 6 illustre une vue en coupe longitudinale d'une troisième variante du dispositif selon l'invention; et
- la figure 7 illustre une vue en coupe longitudinale d'une quatrième variante du disposif selon l'invention ;

Les méthodes de mise en oeuvre du dispositif selon l'invention pour un élément de sécurité sont identiques à ce qui est décrit dans la demande de brevet WO 0189885 et ne seront pas décrites plus avant ici. Par ailleurs, dans son architecture générale, le dispositif selon l'invention est proche du dispositif décrit par ce brevet, et les éléments commun ne seront pas décrits en détail.

Le dispositif 1 selon l'invention est un dispositif de mise en oeuvre d'un élément de sécurité tel qu'un coussin gonflable de sécurité. Il comporte une charge explosible formée par un composé pyrotechnique primaire et un composé pyrotechnique secondaire. Le flux de gaz de combustion du composé primaire échauffe le composé secondaire dont la décomposition est ainsi pilotée. Les gaz produits par le composé primaire et par le composé secondaire interagissent en milieu faiblement confiné par une réaction d'oxydoréduction.

Le composé pyrotechnique primaire est constitué par un propergol. Le composé secondaire comprend principalement du nitrate d'ammonium et un additif réducteur à base de guanidine.

Le dispositif 1 est renfermé dans un manchon cylindrique à paroi épaisse 60.

Un élément primaire 10 comprend un initiateur 11 muni d'une charge renforçatrice et une chambre primaire 18 renfermant le composé pyrotechnique primaire.

L'élément primaire 10 est de forme cylindrique adaptée à l'introduction dans le manchon 60. Une partie arrière 15 portant l'initiateur 11 est pourvu d'une gorge périphérique 62 permettant la fixation de l'élément primaire dans le manchon par sertissage (emboutissage du manchon) et adaptée à recevoir un joint d'étanchéité 64. Elle est également pourvue d'une seconde gorge positionnée plus vers l'intérieur du dispositif et adaptée à recevoir un joint d'étanchéité 70.

Un élément intermédiaire entre le primaire et le secondaire est constitué par un disque 16 de diamètre correspondant au diamètre intérieur du manchon 60 afin de fermer la chambre primaire. Un orifice de sortie de type tuyère 12 est ménagé dans la partie centrale de cet élément 16.

Le manchon 60 est pourvu d'une surépaisseur périphérique intérieure 19 formant restriction annulaire. Cette restriction annulaire offre un épaulement contre lequel vient buter le disque 16. Le disque 16 est pourvu d'une gorge périphérique 61 contenant un joint d'étanchéité.

La tuyère 12 est ménagée au centre du disque 16, de sorte qu'elle s'étend suivant l'axe central du dispositif 1. Cette tuyère a une forme d'ouverture en bilboquet avec une partie cylindrique centrale 13 et deux évasements 14 à 120°.

Un élément secondaire 20 comprend une chambre secondaire dont une première zone est constituée par une chambre de réaction 30 dans laquelle se produit la post-combustion et une seconde zone est constituée par une chambre 40 contenant le composé secondaire.

La chambre de réaction 30 a une forme cylindrique et elle est constituée par un cylindre creux de diamètre extérieur adapté à l'insertion dans le manchon 60 au niveau de la surépaisseur périphérique intérieure 19 formant restriction annulaire. La longueur de cette restriction annulaire correspond à la longueur de la chambre 30. Le cylindre formant la chambre 30 est pourvu d'un rebord annulaire extérieur 21 qui vient buter contre la surépaisseur 19. Ce rebord 21 offre une surface de contact contre laquelle peut venir buter l'ensemble grille-opercule qui sera décrit par la suite. La chambre 30 est pourvue d'orifices périphériques d'évacuation des gaz disposés à intervalles réguliers et correspondant à des orifices ménagés dans le manchon 60.

La chambre contenant le composé secondaire 40 est constituée par un cylindre creux de diamètre extérieur adapté à l'insertion dans le manchon 60. Ce cylindre est ouvert au niveau de son extrémité tournée vers le primaire et fermé à son autre extrémité.

Un bouchon 50, de diamètre adapté à l'insertion dans le manchon 60, comprend une gorge périphérique 63 permettant sa fixation par sertissage et adaptée à recevoir un joint d'étanchéité. Par ailleurs, ce bouchon comporte une seconde gorge, plus proche de l'intérieur du dispositif, permettant l'installation d'un joint d'étanchéité 71.

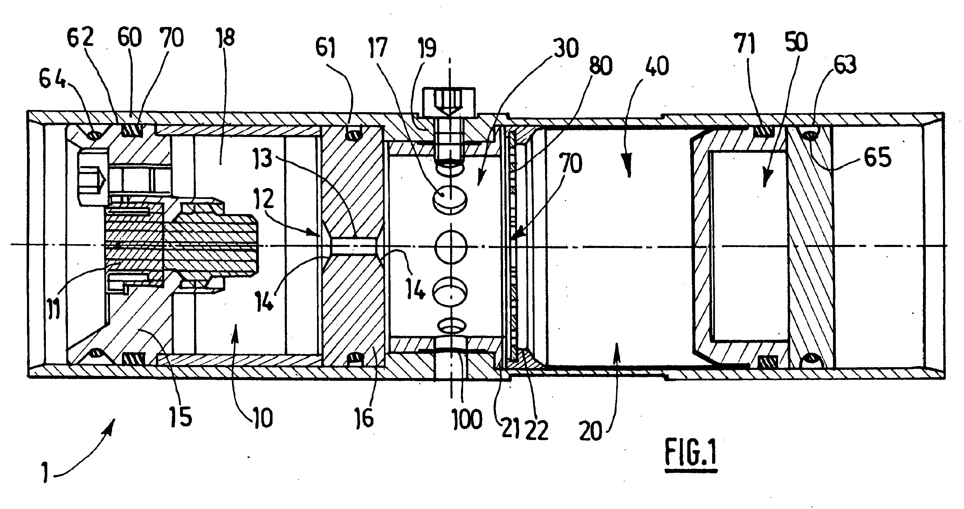

En fonctionnement, les chambres 30 et 40 sont en communication, de sorte que' l'interaction des produits de combustion des composés primaires et secondaires se produise dans un volume faiblement confiné. Toutefois, selon l'invention, un ensemble séparateur 70 est interposé entre ces chambres 30 et 40. Ainsi qu'on le voit sur la figure 1, cet ensemble séparateur est pris en sandwich entre le cylindre de la chambre 30 contre le rebord 21 duquel il vient en butée et le cylindre de la chambre 40. En référence aux figures 1 à 4, cet ensemble séparateur 70 comprend un moyen de cloisonnement 90 adapté à se rompre sous la pression des gaz émis par la tuyère 12 et un moyen 80 ;180 formant obstacle au passage des gaz adapté à laisser passer les gaz dans une partie centrale 81 ;181 autour de l'axe du dispositif et à faire obstacle à leur passage dans une partie périphérique 84 ;184 avec une transparence suffisante pour que le volume d'interaction reste faiblement confiné.

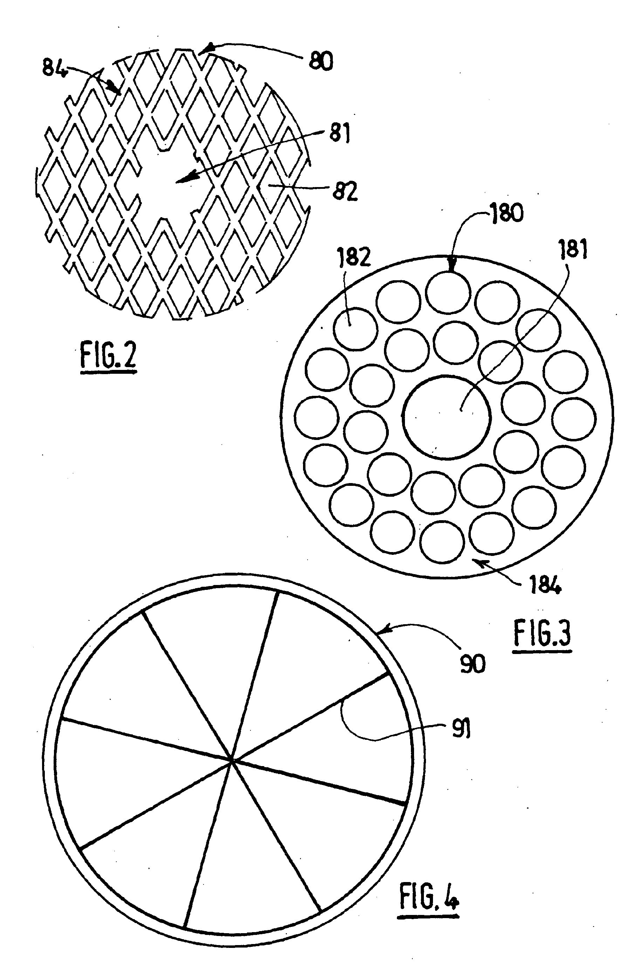

En référence à la figure 2, le moyen formant obstacle est une grille en inox 80 avec mailles 82 en losanges pourvue d'un orifice central 81 circulaire. Ce moyen formant obstacle -à transparence de 50%- intervient contre le rétrécissement 22 à l'extrémité de la chambre et recouvre donc toute la surface de communication entre cette chambre 40 et la chambre 30. Par exemple, dans le cas d'un diamètre du manchon 60 de 35 mm, la grille a un diamètre de 32,2 mm, l'orifice central a un diamètre de 8 mm, les fils de mailles ont un diamètre de 0,8 mm et les mailles mesurent 4 mm sur 8 mm. Cette grille est de faible épaisseur. Par exemple, l'épaisseur de cette grille est de 0,8 mm.

La figure 3 représente un moyen formant obstacle au passage des gaz selon un deuxième mode de réalisation. Il s'agit à nouveau d'une grille en inox mais, cette fois, elle est constituée d'une plaque métallique 180 percée de trous circulaires 182 disposés en deux cercles autour d'un orifice central 181 de plus grand diamètre correspondant au diamètre de l'orifice 81 de la grille 80.

En référence à la figure 4, le moyen de cloisonnement est un opercule 90. Cet opercule ferme hermétiquement la chambre 40 au repos. L'épaisseur de cet opercule est prévue pour qu'il se rompe sous la pression du gaz projeté par la tuyère 12. Afin de faciliter la rupture de l'opercule et de faire en sorte de bien dégager le passage des gaz, l'opercule est pourvu de lignes d'amorces de rupture 91 en étoile. Il peut s'agir de zones de plus faibles épaisseurs ou pré-affaiblies.

Par ailleurs, en référence à la figure 1, une bande intérieure 100 d'operculage des orifices d'évacuation 17 est installée entre le cylindre de la chambre 30 et le manchon 60, au niveau de la surépaisseur intérieure 19. Cette bande assure la fermeture hermétique de ces orifices au repos. Elle est adaptée à se rompre lorsque la pression dans la seconde chambre atteint un niveau donné. Par exemple, cette bande se rompt pour une pression dans la chambre 30 de l'ordre de 100 bars.

Il faut noter que le nombre et la taille des orifices périphériques d'évacuation des gaz 17 sont prévus pour que la pression de fonctionnement dans la seconde chambre soit comprise entre 50 et 250 bars et plus précisément entre 100 et 200 bars.

Il faut également noter que le composé secondaire comprend principalement du nitrate d'ammonium et un additif réducteur à base de dérivé de guanidine. Cet additif comprend principalement du nitrate de guanidine . Alternativement, l'additif comprend de la nitroguanidine à petits grains stabilisés avec ses impuretés intrinsèques.

Il faut également noter que l'élément primaire 10 avec l'initiateur et la charge renforçatrice, d'une part, et le cylindre 40 contenant le composé secondaire avec la grille et l'opercule constituent des sous-ensembles qui peuvent êtres fabriqués indépendamment (manipulables, classés au transport, existant éventuellement pour d'autres applications).

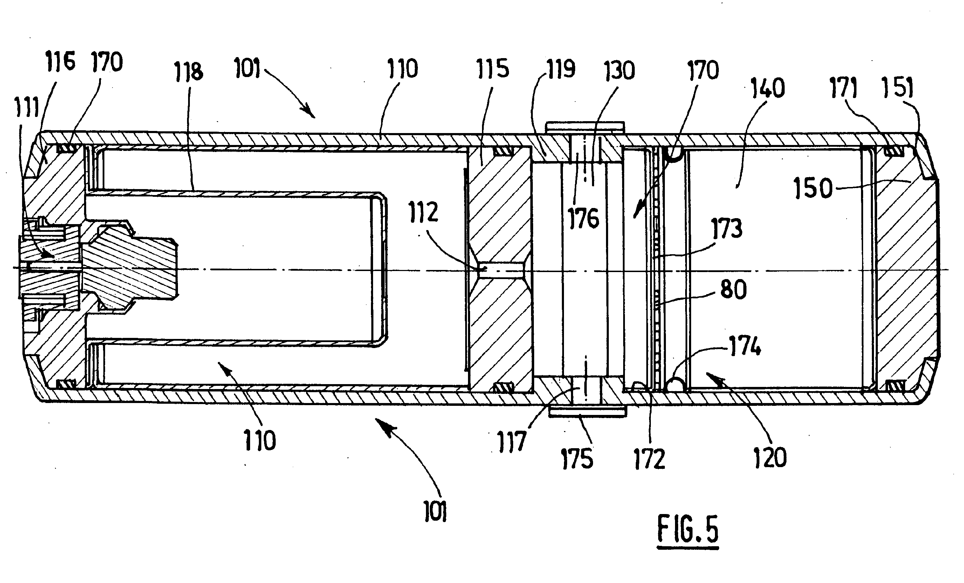

La figure 5 représente une variante de réalisation de la présente invention. Un dispositif 101 est renfermé dans un manchon cylindrique 160.

Un élément primaire 110 comprend un initiateur 111 muni d'une charge renforçatrice et une chambre primaire 118 renfermant le composé pyrotechnique primaire.

L'élément primaire 110 est de forme cylindrique adaptée à être introduite dans le manchon 160. Une partie arrière est pourvue d'une gorge périphérique adaptée à recevoir un joint d'étanchéité 170.

La fixation de l'élément primaire par sertissage ne se fait pas, comme dans le mode de réalisation précédent, par emboutissage d'une partie périphérique du manchon dans une rainure ménagée dans l'élément primaire mais par sertissage à bord rabattu de l'extrémité arrière du manchon contre la surface arrière 116 de l'élément primaire.

Un élément intermédiaire 115 pourvu d'une tuyère 112 est similaire à l'élément 16 décrit dans le mode de réalisation décrit précédemment.

Un élément secondaire 120 comprend, comme dans le mode de réalisation décrit précédemment, une chambre secondaire dont une première zone est constituée par une chambre de réaction 130 dans laquelle se produit la post-combustion et une seconde zone est constituée par une chambre 140 contenant le composé secondaire.

La chambre de réaction 130 est délimitée par une surépaisseur périphérique intérieure 119 formant restriction annulaire du manchon 160 comme dans le mode de réalisation précédent.

La chambre contenant le composé secondaire 140 est constituée par un cylindre creux de diamètre extérieur adapté à l'insertion dans le manchon 160. Ce cylindre est ouvert au niveau de son extrémité tournée vers le primaire et fermé à son autre extrémité.

Un bouchon 150, de diamètre adapté à l'insertion dans le manchon 160, comprend une gorge périphérique permettant l'installation d'un joint d'étanchéité 171. La fixation du bouchon par sertissage ne se fait pas, comme dans le mode de réalisation précédent, par emboutissage d'une partie périphérique du manchon dans une rainure ménagée dans le bouchon mais par sertissage à bord rabattu de l'extrémité avant du manchon contre la surface avant 151 du bouchon.

Comme dans le mode de réalisation précédent, un ensemble séparateur 170 est interposé entre les chambres 130 et 140, cet élément comprenant un moyen de cloisonnement adapté à se rompre sous la pression des gaz émis par la tuyère 112 et une grille 80.

L'ensemble séparateur 170 est porté par un bouchon dont le corps est constitué par un opercule de cloisonnement 173 du type décrit en référence à la figure 1 et un rebord périphérique cylindrique 172 venant prendre appui contre la surépaisseur périphérique intérieure 119 du manchon 160. La grille 80 vient prendre appui contre l'opercule de cloisonnement 173. La grille 80 est donc écartée de l'extrémité de la surépaisseur périphérique intérieure 119 du manchon 160 d'une distance correspondant à la longueur du rebord 172.

Par ailleurs, la grille 80 se trouve en butée contre un épaulement intérieur 174 ménagé à proximité de l'ouverture de la chambre 140. La grille est donc prise en sandwich entre le bouchon 173 et l'épaulement 174. En pratique, l'épaulement 174 est constitué par emboutissage vers l'intérieur de la chambre 140.

Une bande extérieure 175 d'operculage des orifices d'évacuation 17 est installée sur la périphérie du manchon 160. Il s'agit d'une pièce métallique adaptée à se déformer sous la pression des gaz lorsque la pression dans la seconde chambre atteint un niveau donné, de manière à jouer un rôle de déflecteur. Par exemple, cette bande se déforme pour une pression dans la chambre 30 de l'ordre de 100 bars. Par ailleurs, une bande d'operculage intérieur 176 identique à celle décrit dans l'exemple précédent s'étend contre les trous 117.

L'élément primaire 110 avec l'initiateur et la charge renforçatrice, d'une part, et le cylindre 140 contenant le composé secondaire avec la grille et l'opercule constituent des sous-ensembles qui peuvent êtres fabriqués indépendamment. Le sous-ensemble secondaire est très simple à fabriquer, puisqu'il suffit de d'abord remplir le cylindre du mélange, puis de positionner la grille et enfin de fixer le bouchon.

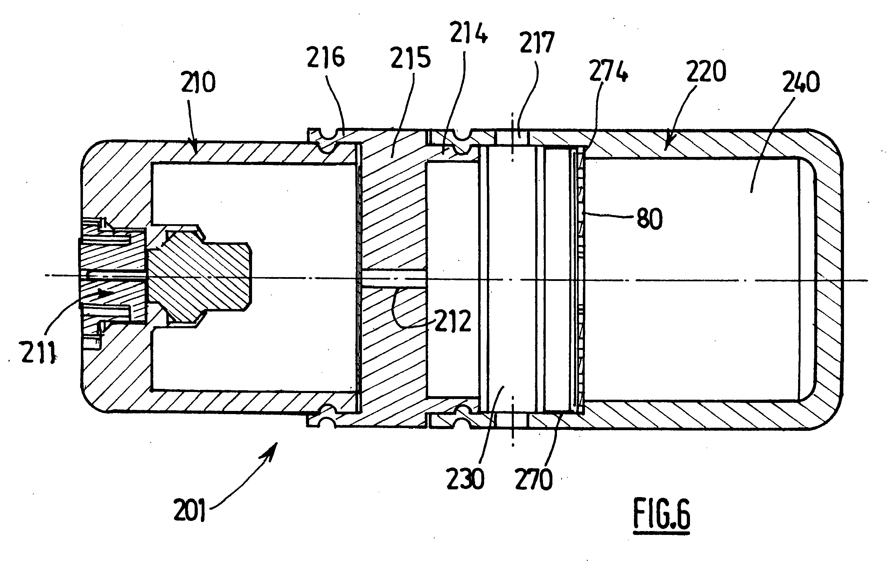

La figure 6 représente encore une autre variante de réalisation de la présente invention.

Dans cette variante, il n'y a pas de manchon, les éléments primaire et secondaire, constitués de cartouches à paroi épaisse, étant directement ancrés sur une pièce centrale dans laquelle est ménagée une tuyère 212.

La pièce centrale 215 est un disque aux deux extrémités duquel sont ménagés des manchons cylindriques coaxiaux 216 et 214, le manchon 216 ayant le même diamètre que le disque 215, tandis que le manchon 214 est légèrement plus petit.

Un élément primaire 210 comprend un élément cylindrique à paroi épaisse fermé à une extrémité à l'intérieur de laquelle sont ménagés des logements pour accueillir un initiateur 211 muni d'une charge renforçatrice. L'autre extrémité, ouverte est adaptée à venir s'emmancher à l'intérieur du manchon 216 de telle sorte que le disque 215 ferme entièrement l'intérieur de l'élément 210, définissant ainsi une chambre primaire reliée à la chambre secondaire par la tuyère 212. Avantageusement, un opercule est rapporté sur la partie ouverte de l'élément primaire 210 afin de fermer la chambre 210 avant montage sur la pièce centrale 215. Cet opercule est adapté à être brisé au niveau de la tuyère sous l'effet de la pression des gaz. La fixation de l'élément primaire sur l'élément central est assurée par sertissage.

Un élément secondaire 220 comprend un élément cylindrique à paroi épaisse, fermé au niveau de l'une de ses extrémités et ouvert à l'autre. La paroi de cet élément secondaire est plus fine au niveau de son extrémité ouverte, après un épaulement 274. Le diamètre intérieur de cet élément secondaire au niveau de son extrémité à paroi plus mince correspond au diamètre extérieur du cylindre 214 de sorte que ce dernier est adapté à venir s'emmancher dans l'élément secondaire.

Une grille 80 est adaptée à être installée à l'intérieur de l'élément secondaire 220, en butée contre l'épaulement 274. Un bouchon 270 pourvu d'un opercule adapté à être rompu sous la pression de gaz, comme dans l'exemple précédent, vient s'intercaler entre la grille est une pièce cylindrique formant chambre de postcombustion 230 pourvue de trous d'évacuation communiquant avec des trous d'évacuation 217 ménagés sur la périphérie de l'élément 220. La chambre 230 vient, lors de l'emmanchement du cylindre 214, en butée contre l'extrémité de ce dernier, de sorte que l'ensemble constitué par la grille, le bouchon et la chambre est immobilisé à l'intérieur de l'élément secondaire 220. Le verrouillage de l'élément secondaire sur l'élément central se fait par sertissage.

La cartouche secondaire 220 peut être fabriquée indépendamment (remplissage de mélange, positionnement de la grille et enfin fermeture par soudage du bouchon. De même, la cartouche primaire 210 avec l'initiateur et la charge renforçatrice peut être fabriquée indépendamment (remplissage de mélange et fermeture par soudage ou collage de l'opercule).

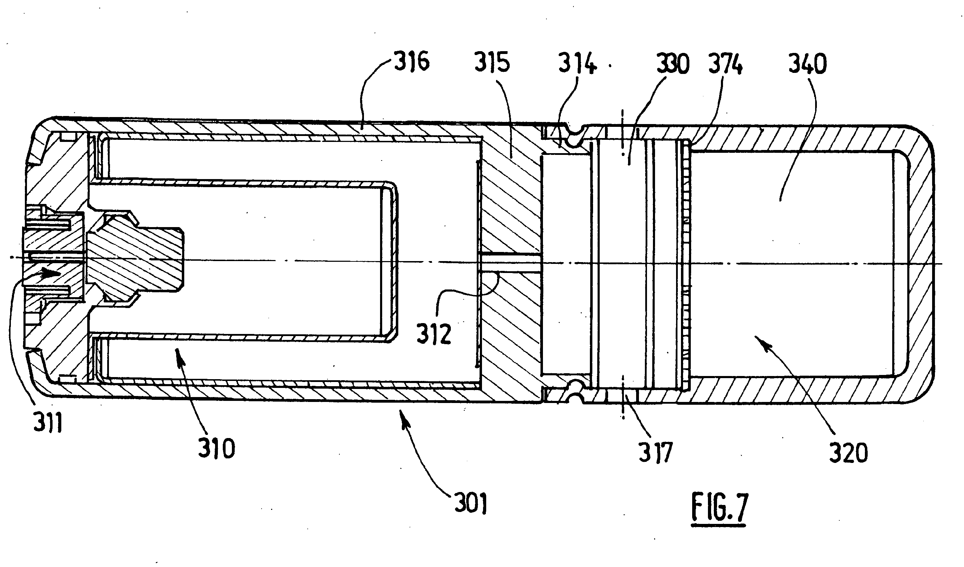

La figure 7 représente encore une autre variante de réalisation de la présente invention.

Cette variante est similaire à la précédente, à la différence que le manchon 314 de la pièce centrale 315 ne forme pas moyen d'ancrage d'une cartouche à paroi épaisse mais manchon à paroi épaisse dans lequel un élément primaire 310 vient s'insérer exactement de la même façon que dans le mode de réalisation décrit en référence à la figure 5, avec verrouillage par emboutissage de l'extrémité du manchon contre la surface arrière de l'élément primaire. L'élément secondaire 320 est, comme dans l'exemple précédent, une cartouche à paroi épaisse qui vient s'ancrer à la pièce centrale 315.

Comme dans les exemples précédents, les éléments primaire et secondaire peuvent êtres fabriqués indépendamment.

L'invention est décrite dans ce qui précède à titre d'exemple. Il est entendu que l'homme du métier est à même de réaliser différentes variantes de l'invention sans pour autant sortir du cadre des revendications.

## Revendications

1. Dispositif (1 ;101 ;201 ;301) de génération de gaz pour système de sécurité comprenant une charge explosible formée au moins par un composé pyrotechnique primaire, dans une première chambre (10 ;110 ;210 ;310), initié par au moins un initiateur (11 ;111 ;211 ;311) muni d'une charge renforçatrice et un composé secondaire, dans une seconde chambre (20 ;120 ;220 ;320), dont la décomposition est pilotée par des produits de combustion du composé primaire, une interaction des produits de combustion du composé primaire et ceux du composé secondaire par réaction d'oxydoréduction se produisant dans un volume faiblement confiné, la première chambre communiquant avec ladite seconde chambre par l'intermédiaire d'une tuyère centrale (12 ;112 ;212 ;312) et ladite seconde chambre étant pourvue au niveau d'une première zone (30 ;130 ;230 ;330) voisine de ladite première chambre d'orifices (17 ;117 ;217 ;317) périphériques d'évacuation des gaz et renfermant au niveau d'une seconde zone (40 ;140 ;240 ;340) ledit composé secondaire, **caractérisé en ce qu'**un moyen (80 ;180) formant obstacle au passage des gaz est installé dans ladite seconde chambre entre lesdites première et seconde zones, ledit moyen formant obstacle laissant passer les gaz dans une partie centrale (81 ;181) et faisant obstacle à leur passage dans une partie périphérique (84 ;184) avec une transparence suffisante pour que le volume d'interaction reste faiblement confiné.

2. Dispositif selon la revendication 1, **caractérisé en ce que** ledit moyen formant obstacle a une transparence comprise entre 40 et 60%.

3. Dispositif selon la revendication 2, **caractérisé en ce que** ledit moyen formant obstacle a une transparence de 50%.

4. Dispositif selon l'une quelconque des revendications 1 à 3, **caractérisé en ce que** ledit moyen formant obstacle est une grille (80) avec mailles (82) en losanges pourvue d'un orifice central (81).

5. Dispositif selon l'une quelconque des revendications 1 à 3, **caractérisé en ce que** ledit moyen formant obstacle est une plaque métallique (180) percée de trous circulaires (182) disposés autour d'un orifice central circulaire (181) de plus grand diamètre.

6. Dispositif selon l'une quelconque des revendications 4 et 5, **caractérisé en ce que** ledit moyen formant obstacle (80 ;180) est en inox et a une épaisseur comprise entre 0,5 et 1,5 mm.

7. Dispositif selon l'une quelconque des revendications 4 et 5, **caractérisé en ce que** ledit moyen formant obstacle (80 ;180) est en aluminium et a une épaisseur comprise entre 1 et 3 mm.

8. Dispositif selon l'une quelconque des revendications 4 à 7, **caractérisé en ce que** ledit moyen formant obstacle est maintenu par un épaulement annulaire (174 ;274 ;374) ménagé sur la périphérie intérieure de ladite seconde chambre (120 ;220 ;320), entre lesdites premières (130 ;230 ;330) et seconde (140 ;240 ;340) zones.

9. Dispositif selon l'une quelconque des revendications précédentes, **caractérisé en ce que** la pression de fonctionnement dans la seconde chambre (20 ;120 ;220 ;320) est comprise entre 50 et 250 bars.

10. Dispositif selon la revendication 8, **caractérisé en ce que** la pression de fonctionnement est comprise entre 100 et 200 bars.

11. Dispositif selon l'une quelconque des revendications précédentes, **caractérisé en ce qu'**un dispositif (100 ;175) d'operculage desdits orifices (17 ;117 ;217 ;317) d'évacuation assure la fermeture de ces orifices, ladite bande étant adaptée à se rompre lorsque la pression dans la seconde chambre (20 ;120 ;220 ;320) atteint un niveau donné.

12. Dispositif selon la revendication 11, **caractérisé en ce que** ledit niveau de pression pour lequel ledit dispositif intérieur d'operculage se rompt est compris entre 30 et 170 bars.

13. Dispositif selon l'une quelconque des revendications précédentes, **caractérisé en ce que** ladite seconde zone (40 ;140 ;240 ;340) de la seconde chambre (20 ;120 ;220 ;320) contenant le composé secondaire est fermé hermétiquement au moyen d'un opercule (90) adapté à se rompre sous la pression du gaz issu de ladite tuyère (12 ;112 ;212 ;312).

14. Dispositif selon la revendication 12, **caractérisé en ce que** ledit opercule (90) comporte des lignes (91) d'amorces de rupture en étoile.

15. Dispositif selon l'une quelconque des revendications précédentes, **caractérisé en ce que** ladite tuyère (12 ;112) a une forme d'ouverture en bilboquet avec une partie cylindrique centrale (13) et deux évasements (14) à 120°.

16. Dispositif selon l'une quelconque des revendications précédentes, **caractérisé en ce que** ledit composé secondaire comprend du nitrate d'ammonium et un additif réducteur à base de guanidine.

## Claims

1. Gas (1; 101; 201; 301) generator for a safety system comprising an explosive charge formed at least by a primary pyrotechnic compound, in a first chamber (10; 110; 210; 310), initiated by at least one initiator (11; 111; 211; 311) provided with a reinforcing charge and a secondary compound, in a second chamber (20; 120; 220; 320), of which the decomposition is controlled by combustion products from the primary compound, an interaction of the combustion products of the primary compound and those of the secondary compound via an oxidation-reduction reaction being produced in a slightly confined volume, the first chamber communicating with said second chamber by the intermediary of a central nozzle (12; 112; 212; 312) and said second chamber provided in a first zone (30; 130; 230; 330) close to said first chamber with peripheral orifices (17; 117; 217; 317) for discharging the gases and containing in a second zone (40; 140; 240; 340) said secondary compound, **characterised in that** a means (80; 180) forming an obstacle to the passage of the gases is installed in said second chamber between said first and second zones, said obstacle-forming means allowing the gases to pass into a central part (81; 181) and forming an obstacle to their passage into a peripheral part (84; 184) with sufficient transparency for the gas interaction volume to remain slightly confined.

2. Generator according to claim 1, **characterised in that** said obstacle-forming means has a transparency between 40 and 60%.

3. Generator according to claim 2, **characterised in that** said obstacle-forming means has a transparency of 50%.

4. Generator according to any of claims 1 to 3, **characterised in that** said obstacle-forming means is a grill (80) with lozenge-shaped chain links (82) provided with a central orifice (81).

5. Generator according to any of claims 1 to 3, **characterised in that** said obstacle-forming means is a metal plate (180) pierced with circular holes (182) arranged around a circular central orifice (181) of larger diameter.

6. Generator according to any of claims 4 and 5, **characterised in that** said obstacle-forming means (80; 180) is made of stainless steel and has a thickness between 0.5 and 1.5 mm.

7. Generator according to any of claims 4 and 5, **characterised in that** said obstacle-forming means (80; 180) is made of aluminium and has a thickness between 1 and 3 mm.

8. Generator according to any of claims 4 to 7, **characterised in that** said obstacle-forming means is maintained by an annular shoulder (174; 274; 374) arranged on the interior periphery of said second chamber (120; 220; 320), between said first (130; 230; 330) and second (140; 240; 340) zones.

9. Generator according to any of the preceding claims, **characterised in that** the operating pressure in the second chamber (20; 120; 220; 320) is between 50 and 250 bars.

10. Generator according to claim 8, **characterised in that** the operating pressure is between 100 and 200 bars.

11. Generator according to any of the preceding claims, **characterised in that** a device (100; 175) for sealing said orifices (17; 117; 217; 317) for discharging provides the closing of these orifices, said strip adapted to break when the pressure in the second chamber (20; 120; 220; 320) reaches a given level.

12. Generator according to claim 11, **characterised in that** said level of pressure for which said interior device for sealing breaks is between 30 and 170 bars.

13. Generator according to any of the preceding claims, **characterised in that** said second zone (40; 140; 240; 340) of the second chamber (20; 120; 220; 320) containing the secondary compound is hermetically sealed by means of a seal (90) adapted to break under the pressure of the gas coming from said nozzle (12; 112; 212; 312).

14. Generator according to claim 12, **characterised in that** said seal (90) contains break lines (91) in the shape of a star.

15. Generator according to any of the preceding claims, **characterised in that** said nozzle (12; 112) has an opening in the form of a cup-and-ball game with a central cylindrical part (13) and two recesses (14) at 120°.

16. Generator according to any of the preceding claims, **characterised in that** secondary compound includes ammonium nitrate and a guanidine-based reducing additive.

## Patentansprüche

1. Vorrichtung (1; 101; 201; 301) zum Erzeugen von Gas für Sicherheitssysteme, umfassend eine explosionsfähige Ladung, die durch mindestens eine pyrotechnische Verbindung gebildet wird, in einer ersten Kammer (10; 110; 210; 310), ausgelöst durch mindestens einen Auslöser (11; 111; 211; 311), der mit einer Verstärkerladung und einer Sekundärverbindung versehen ist, in einer zweiten Kammer (20; 120; 220; 320), deren Auflösung durch Verbrennungsprodukte der Primärverbindung gesteuert wird, wobei eine Interaktion der Verbrennungsprodukte der Primärverbindung und derjenigen der Sekundärverbindung durch eine Redoxreaktion in einem schwach eingeschlossenen Volumen erfolgt, wobei die erste Kammer mit der zweiten Kammer über eine mittlere Düse (12; 112; 212; 312) in Verbindung steht und die zweite Kammer in einem ersten Bereich (30; 130; 230; 330) neben der ersten Kammer mit umlaufenden Öffnungen (17; 117; 217; 317) zum Abzug der Gase versehen ist und an einem zweiten Bereich (40; 140; 240; 340) die Sekundärverbindung enthält, **dadurch gekennzeichnet, dass** ein Mittel (80; 180), das eine Störung für den Durchgang der Gase bildet, in der zweiten Kammer zwischen den ersten und zweiten Bereichen installiert ist, wobei das eine Störung bildende Mittel die Gase in einem mittleren Teil (81; 181) durchlässt und ihren Durchgang in einem umlaufenden Teil (84; 184) mit einer Transparenz, die ausreicht, damit der Interaktionsraum schwach eingeschlossen bleibt, behindert.

2. Vorrichtung nach Anspruch 1, **dadurch gekennzeichnet, dass** das eine Störung bildende Mittel eine Transparenz zwischen 40 und 60% aufweist.

3. Vorrichtung nach Anspruch 2, **dadurch gekennzeichnet, dass** das eine Störung bildende Mittel eine Transparenz von 50% aufweist.

4. Vorrichtung nach einem der Ansprüche 1 bis 3, **dadurch gekennzeichnet, dass** das eine Störung bildende Mittel ein Gitter (80) mit rautenförmigen Maschen (82) ist, das mit einer mittleren Öffnung (81) versehen ist.

5. Vorrichtung nach einem der Ansprüche 1 bis 3, **dadurch gekennzeichnet, dass** das eine Störung bildende Mittel eine Metallplatte (180) ist, in der kreisförmige Löcher (182) gebohrt sind, die um eine kreisförmige mittlere Öffnung (181) von größerem Durchmesser herum angeordnet sind.

6. Vorrichtung nach einem der Ansprüche 4 und 5, **dadurch gekennzeichnet, dass** das eine Störung bildende Mittel (80; 180) aus Edelstahl besteht und eine Dicke zwischen 0,5 und 1,5 mm aufweist.

7. Vorrichtung nach einem der Ansprüche 4 und 5, **dadurch gekennzeichnet, dass** das eine Störung bildende Mittel (80; 180) aus Aluminium besteht und eine Dicke zwischen 1 und 3 mm aufweist.

8. Vorrichtung nach einem der Ansprüche 4 bis 7, **dadurch gekennzeichnet, dass** das eine Störung bildende Mittel von einem ringförmigen Ansatz (174; 274; 374) gehalten wird, der auf dem Innenumfang der zweiten Kammer (120; 220; 320) eingerichtet ist, zwischen den ersten (130; 230; 330) und zweiten (140; 240; 340) Bereichen.

9. Vorrichtung nach einem der vorhergehenden Ansprüche, **dadurch gekennzeichnet, dass** der Betriebsdruck in der zweiten Kammer (20; 120; 220; 320) zwischen 50 und 250 bar liegt.

10. Vorrichtung nach Anspruch 8, **dadurch gekennzeichnet, dass** der Betriebsdruck zwischen 100 und 200 bar liegt.

11. Vorrichtung nach einem der vorhergehenden Ansprüche, **dadurch gekennzeichnet, dass** eine Schutzdeckelvorrichtung (100; 175) der Abzugsöffnungen (17; 117; 217; 317) den Verschluss dieser Öffnungen sicherstellt, wobei das Band dazu geeignet ist, zu zerbrechen, wenn der Druck in der zweiten Kammer (20; 120; 220; 320) einen bestimmten Pegel erreicht.

12. Vorrichtung nach Anspruch 11, **dadurch gekennzeichnet, dass** der Druckpegel, bei dem die innere Schutzdeckelvorrichtung zerbricht, zwischen 30 und 170 bar liegt.

13. Vorrichtung nach einem der vorhergehenden Ansprüche, **dadurch gekennzeichnet, dass** der zweite Bereich (40; 140; 240; 340) der zweiten Kammer (20; 120; 220; 320), welche die Sekundärverbindung enthält, hermetisch mittels eines Schutzdeckels (90) geschlossen ist, der dazu geeignet ist, unter dem Druck des Gases aus der Düse (12; 112; 212; 312) zu zerbrechen.

14. Vorrichtung nach Anspruch 12, **dadurch gekennzeichnet, dass** der Schutzdeckel (90) sternförmige Anrisslinien (91) umfasst.

15. Vorrichtung nach einem der vorhergehenden Ansprüche, **dadurch gekennzeichnet, dass** die Düse (12; 112) eine kugelzapfenförmige Öffnung mit einem mittleren zylindrischen Teil (13) und zwei Ausweitungen (14) bei 120° aufweist.

16. Vorrichtung nach einem der vorhergehenden Ansprüche, **dadurch gekennzeichnet, dass** die Sekundärverbindung Ammoniumnitrat und ein Reduktionsmittel auf Guanidinbasis umfasst.
